# EUROPEAN PATENT APPLICATION

(11) **EP 3 287 465 A1**
(43) Date of publication of application: **28.02.2018**
(21) Application number: 17187827.5
(22) Date of filing: 24.08.2017
(51) Int. Cl.: C07F 15/00, C07F 15/04, B01J 31/12, C23C 18/30

(54) **METAL CATALYST, MANUFACTURING METHOD AND APPLICATION THEROF**

(30) Priority: 24.08.2016 US 201662378837 P
(71) Applicant: LCY Chemical Corp., Kaohsiung City 812 (TW)
(72) Inventor: LIN, Yu-Tien, Xiaogang Dist., Kaohsiung City 812 (TW); LEE, I-Tsun, Xiaogang Dist., Kaohsiung City 812 (TW); HSU, Chan-Chia, Xiaogang Dist., Kaohsiung City 812 (TW)
(74) Representative: Becker, Eberhard

(57) **Abstract**

The disclosure provides a metal catalyst having a structure as shown in the Formula (1) or Formula (2), wherein M is palladium, copper, platinum, nickel or silver ions; X is fluorine, chlorine, bromine or iodine; and L is a chelator ligand of nitrogen-containing aromatic ring. The disclosure also provides a manufacturing method and applications of the metal catalyst in metal plating.

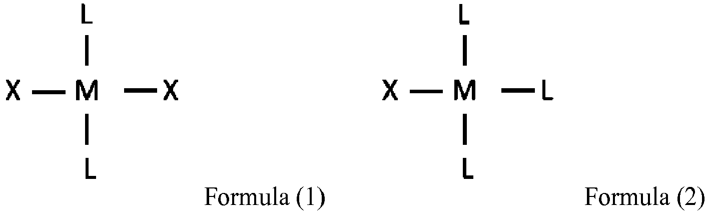

## Description

### CROSS REFERENCE TO RELATED APPLICATIONS

This Application claims priority of U.S. Provisional Application No. 62/378,837, filed on Aug. 24, 2016, the entirety of which is incorporated by reference herein.

### BACKGROUND

### Technical Field

The disclosure relates to a metal catalyst, and in particular to a metal catalyst suitable for chemical plating and a method of preparing the same, as well as an application of the metal catalyst in chemical plating.

### Description of the Related Art

Chemical plating is also known as electroless plating, which refers to a reduction reaction in which metal ions in the plating solution are continuously plated on a surface of an activated substrate under controlled conditions. As such, the metallization of the substrate can be achieved by plating the substrate without electric power. Since the plating layer accomplished by using chemical plating has good uniformity, it can be applied to precision parts or the interior of deep holes of the substrate on which it is difficult to operate general plating. Furthermore, after the proper pretreatment, the non-conductive substrate can also be plated with a metal layer by chemical plating. Therefore, the chemical plating is widely used in the metallization of a non-conductor.

In the process of chemical plating, a catalyst is required to activate the surface of the substrate. The activation step is a key factor in controlling the deposition rate of electroless plating. Although the existing catalyst has been generally adequate for its intended purposes, it has not been entirely satisfactory in every respect, especially the operational range of the catalyst.

### BRIEF SUMMARY

The disclosure provides a metal catalyst having a structure as shown in Formula (1) or Formula (2), wherein M is a palladium, copper, platinum, nickel or silver ion; X is fluorine, chlorine, bromine or iodine; and L is a chelator ligand of nitrogen-containing aromatic ring. The disclosure also provides a manufacturing method and applications of the metal catalyst.

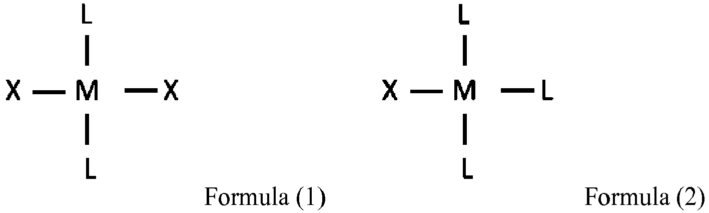

The disclosure further provides a method for preparing a metal catalyst, comprising: mixing a metal salt with an alkali metal halide in water to form a metal catalyst precursor, wherein the metal salt is a salt containing a palladium, copper, platinum, nickel or silver ion; and reacting the metal catalyst precursor with a chelating agent having a nitrogen-containing aromatic ring to form a metal catalyst.

The disclosure further provides a metal catalyst which is prepared by the above method for preparing the metal catalyst.

The disclosure further provides a method for chemical plating, comprising: immersing a substrate in a solution containing the metal catalyst as claimed in claim 1, wherein the pH value of the solution is in a range of 2 to 12; and then, immersing the substrate in a chemical plating solution.

A detailed description is given in the following embodiments with reference to the accompanying drawings.

### BRIEF DESCRIPTION OF THE DRAWINGS

The disclosure can be more fully understood by reading the subsequent detailed description and examples with references made to the accompanying drawings, wherein:
Fig. 1 is a scanning electron microscopic image of a plating layer in accordance with one embodiment of the disclosure.
Fig. 2 is a scanning electron microscopic image of a plating layer in accordance with another embodiment of the disclosure.
Fig. 3 illustrates an evaluation standard for a backlight test.

### DETAILED DESCRIPTION

Even if a plurality of technical features is simultaneously disclosed by any embodiments described below, it is not intended that a person using the disclosure has to simultaneously implement all the technical features of any embodiments. That is, as long as the possibility of implementation is not affected, a person with ordinary skill in the art is able to selectively implement some of the technical features rather than all of the technical features or design requirements as desired in accordance with the disclosure, thereby increasing the flexibility of the disclosure.

In the process of chemical plating, a catalyst is required to perform a pretreatment to activate a surface of a substrate. However, the existing catalyst has to be used under a strong alkaline environment (e.g., pH 9-11). If the catalyst is used in a non-alkaline environment, the catalytic efficiency is deteriorated and precipitation may even occur. However, in the strong alkaline environment, it is easy to cause unnecessary corrosion of the substrate, particularly resin or glass. Thus, such a catalyst cannot be used with an alkali-sensitive substrate. Furthermore, after activating the substrate with the catalyst in the strong alkaline environment, the substrate needs to be flushed or neutralized for subsequent processes, thereby increasing the cost. Therefore, a catalyst which can be used in an environment with a wide range of pH values is desirable.

To address the above issues, the disclosure provides a metal catalyst which can be applied to an environment having a wide range of pH values.

The disclosure provides a metal catalyst having a structure as shown in the formula (1) or formula (2). 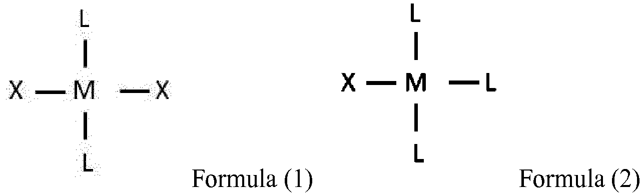 M is a palladium, copper, platinum, nickel or silver ion; X is fluorine, chlorine, bromine or iodine; and L is a chelating ligand having a nitrogen-containing aromatic ring.

In the embodiments of the disclosure, a molar ratio of metal ions to fluorine, chlorine, bromine or iodine to a chelating ligand (M: X: L) is 1: 2: 2. In other embodiments, a molar ratio of metal ions to fluorine, chlorine, bromine or iodine to a chelating ligand (M: X: L) is 1: 1: 3. The metal of the above metal ions used herein may form a coordination complex. A transition metal is particularly suitable. Preferably, the metal is selected from the group consisting of palladium, copper, platinum, nickel and silver. In some embodiments, the metal is palladium. In other embodiments, the metal is nickel. In yet other embodiments, the metal is silver.

In the description above, X is fluorine, chlorine, bromine or iodine. Since the halogen atom has high electronegativity (or high electron withdrawing ability), the connection with the metal can be more stable, thereby enhancing the solubility of the metal catalyst in an aqueous solution with a different pH value.

In the description above, L is a chelating ligand having a nitrogen-containing aromatic ring, in which a lone pair on a nitrogen atom is coordinated with an empty orbital of the metal to form a complex. Specifically, the chelating ligand having a nitrogen-containing aromatic ring may include, but is not limited to, the following structures: 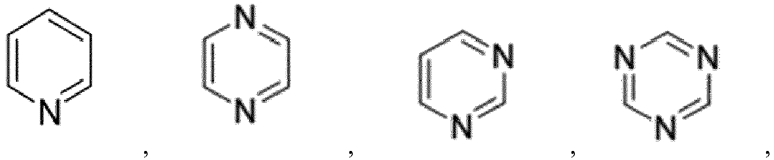 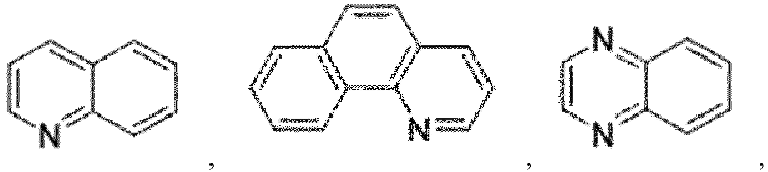 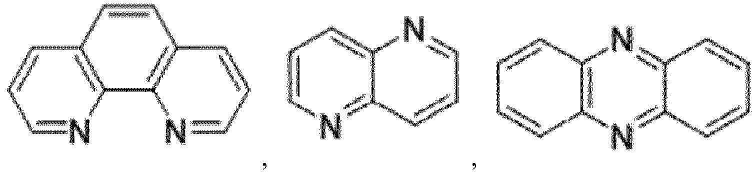 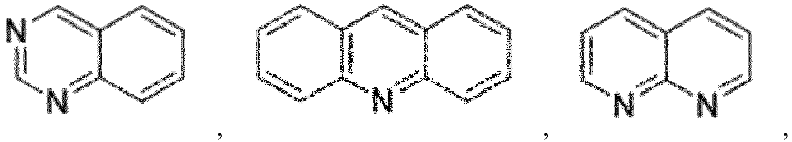 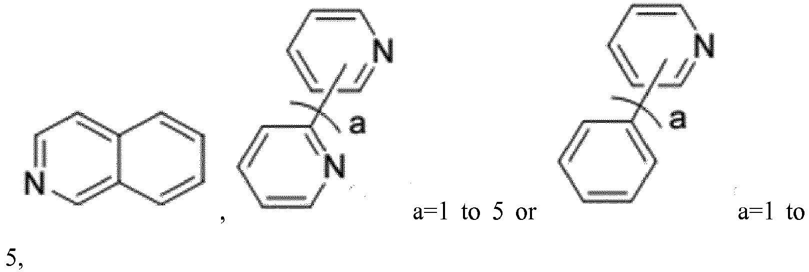 wherein at least one hydrogen on carbon of the chelating ligand is substituted by R, 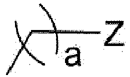 or Q; wherein R is a hydrocarbon group having 1 to 6 carbon atoms; Z is a hydroxyl group, a methoxy group or an ethoxy group, and a is an integer from 1 to 6; Q is COOH, COOR¹, COR¹, NHR¹ or NR¹R², wherein each of R¹ and R² is independently hydrogen or a hydrocarbon group having 1 to 6 carbon atoms.

As used herein, the hydrocarbon group having 1 to 6 carbon atoms represents a saturated or unsaturated, straight, branched or cyclic hydrocarbon group having 1 to 6 carbon atoms. For example, the hydrocarbon group having 1 to 6 carbon atoms may include a linear alkyl group such as a methyl group, an ethyl group, a propyl group, a butyl group, a pentyl group or a hexyl group; a cycloalkyl group such as a cyclopropyl group, a cyclobutyl group, cyclopentyl group or cyclohexyl group; a branched alkyl group such as a 2-methylpentyl group, 2-methylpentyl group, 2-methylpentyl group or 3-methylpentyl group; an alkenyl group such as a vinyl group, a propenyl group, a butenyl group, a pentenyl group or a hexenyl group; an alkynyl group such as an ethynyl group, a propynyl group, a butynyl group, a pentynyl group or a hexynyl group.

In one embodiment, the chelating ligand of the nitrogen-containing aromatic ring has a pyridine structure. For the sake of clarity, the specific structure of L will be described by taking the pyridine structure as an example. It should be understood that the following description is for illustrative purpose and is not intended to be limiting. As will be appreciated by those of ordinary skill in the art, the following description is also applicable to other nitrogen-containing aromatic rings. The pyridine structure may be 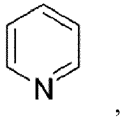 wherein at least one hydrogen on carbon of the chelating ligand is substituted by R, 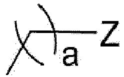 or Q; wherein R is a saturated or unsaturated, linear, branched or cyclic hydrocarbon group having 1 to 6 carbon atoms; Z is a hydroxyl group, a methoxy group or an ethoxy group, and a is an integer from 1 to 6; and Q is COOH, COOR¹, COR¹, NHR¹ or NR¹R², wherein each of R¹ and R² is independently hydrogen or a hydrocarbon group having 1 to 6 carbon atoms.

The above pyridine having a substituent group may include a hydroxyl group. It is inferred that since the oxygen atom of the hydroxyl group has a lone pair and high electron withdrawing ability, the connection with the metal can be more stable, thereby enhancing the solubility of the metal catalyst in an aqueous solution with a different pH value. For example, the pyridine having the hydroxyl group may include, but is not limited to, 2-pyridylmethanol, 3-pyridylmethanol, 4-pyridylmethanol, 2-pyridineethanol, 3-pyridineethanol or 4-pyridineethanol.

The above pyridine may also include more than two substituent groups. For example, one of the substituent groups is a methyl group and the other is an amine group. The nitrogen of the amine group has a lone pair and high electron withdrawing ability, which may enhance the solubility of the metal catalyst in an aqueous solution with a different pH values. For example, the pyridine having two substituent groups may include, but is not limited to, 4-amino-6-methylpyridine, 3-amino-6-methylpyridine, 2-amino-6-methylpyridine, 2-amino-5-methylpyridine or 2-amino-4-methylpyridine.

### [Preparation Method]

At least one embodiment of the disclosure provides a method for preparing the metal catalyst. The method includes mixing a metal salt with an alkali metal halide in deionized water to form a metal catalyst precursor, in which the metal salt is a salt containing palladium, copper, platinum, nickel or silver. Then, the chelating agent having a nitrogen-containing aromatic ring is added to form the metal catalyst.

In at least one embodiment, the salt containing palladium may include, but is not limited to, a palladium halide such as palladium chloride, palladium fluoride, palladium bromide or palladium iodide, palladium acetate, palladium sulfate, palladium nitrate, potassium palladium chloride or sodium palladium chloride. The metal salt may be the salt containing nickel, which includes but is not limited to a nickel halide such as nickel chloride, nickel fluoride, nickel bromide or nickel iodide, nickel acetate, nickel sulfate or nickel nitrate.

In at least one embodiment of the method for preparing the metal catalyst, a concentration of the metal salt is in a range of 10 to 1000 mg/L, in a range of 100 to 500 mg/L or in a range of 150 to 250 mg/L.

In at least one embodiment of the method for preparing the metal catalyst, the alkali metal halide may be an alkali metal salt of chlorine, an alkali metal salt of iodine or a combination thereof, for example, potassium fluoride, potassium chloride, potassium bromide or potassium iodide.

In at least one embodiment, a molar ratio of metal ions of the metal salt to halogen of the alkali metal halide is 1: 1 to 1: 3.

The reaction of the metal salt and the alkali metal halide may be performed at room temperature. The reaction temperature may be adjusted as required, for example, about 20°C to 60°C. The reaction time may be from 5 minutes to 24 hours, for example about 6 to 15 hours.

In the process of the reaction, a metal catalyst precursor is formed by the metal salt and the alkali metal halide in the solution. The metal catalyst precursor is a complex of metal ions and halogen. In one embodiment, when using palladium chloride as the metal salt and using potassium chloride as the alkali metal halide, the precursor is formed as K₂PdCl₄.

After forming the metal catalyst precursor, a chelating agent having a nitrogen-containing aromatic ring is added to form the metal catalyst. The nitrogen-containing aromatic ring described above may be used as the chelating agent. Taking pyridine as an example, the nitrogen-containing aromatic ring may include, but is not limited to, pyridine having a hydroxyl group such as 2-pyridine methanol, 3-pyridine methanol, 4-pyridine methanol, 2-pyridineethanol, 3-pyridineethanol or 4-pyridineethanol; pyridine having an amine group such as 4-amino-6-methylpyridine, 3-amino-6-methylpyridine, 2-amino-6-methylpyridine, 2-amino-5-methylpyridine or 2-amino-4-methylpyridine.

In at least one embodiment, a molar ratio of metal ions of the metal salt to the chelating ligand of the nitrogen-containing aromatic ring is 1: 1 to 1: 3.

In at least one embodiment, the reaction of the metal salt and the alkali metal halide may be performed at a condition as required. For example, the reaction temperature may be about 20°C to 100°C, about 20°C to 95°C or about 60°C to 100°C. The reaction time may be from 5 minutes to 24 hours, for example about 5 to 24 hours.

In at least one embodiment, the metal catalyst is crystalline. The metal catalyst product may further be separated from the solution by a filtration step, and be recrystallized to obtain a purified metal catalyst for subsequent steps. In other embodiments, the reaction solution containing the metal catalyst may also be directly used in subsequent steps.

### [Catalyst]

The metal catalyst synthesized by the above method may be formulated into a catalyst solution, and the catalyst solution may be used to plate various substrates by chemical plating.

The catalyst solution formulated by the above method may be adjusted to a desired range of pH values by using an acid or a base. The pH value may range from acidic to basic. The pH value of the catalyst solution of the disclosure is in a range of 2 to 12. In one embodiment, the pH value may be in a range of 3 to 12, and in other embodiments, the pH value may be in a range of 2 to 8 or in a range of 3 to 8. Since the metal catalyst of the disclosure can be formulated into a catalyst solution with any desired pH value, the metal catalyst can be widely applied to various substrates. In addition to inorganic substrates, the metal catalyst can be applied to thermosetting resins, thermoplastic resins or glass substrates which are sensitive to alkaline solutions.

In at least one embodiment, the acid for adjusting the pH value includes an organic acid, an inorganic acid or a salt thereof. The organic acid includes, but is not limited to, monocarboxylic acid or polycarboxylic acid such as benzoic acid, maleic acid or acetic acid. The inorganic acid includes, but is not limited to, hydrochloric acid, sulfuric acid, boric acid, phosphoric acid or nitric acid. The base for adjusting the pH value includes an organic base, an inorganic base or a salt thereof. The organic base includes an amine and a nitrogen-containing heterocyclic compound. The inorganic base includes ammonia, a metal hydroxide, a metal oxide or a metal hydride.

The catalyst solution provided by the embodiments of the disclosure is capable of efficiently catalyzing in a wide range of pH values (pH 2-12 or pH 3-12 in at least one embodiment), and thus the catalyst solution can be applied to various substrates, especially for polyimide and a glass substrate with poor resistance to strong base. Other suitable substrate includes a ceramic substrate, a semiconductor substrate, a printed substrate, a thermosetting resin substrate, a thermoplastic resin substrate, a paper or a cloth. The glass substrate includes sodium glass, lead glass, boron glass, soda lime glass, borosilicate glass, aluminum borosilicate glass, anhydrous silica glass or quartz glass.

### [Chemical plating]

The chemical plating may be performed on the substrate after the subtrae is activated by the metal catalyst of the disclosure. For example, copper, copper alloy, nickel or nickel alloy is used. In one embodiment, copper or copper alloy may be deposited on a printed circuit board (PCB) to form vias or blind holes. The chemical plating may also be used for preparing a copper foil.

The source of copper ions for chemical plating is usually a copper-containing salt including, but not limited to, copper-containing halide, nitrate, sulfate, acetate or other organic salt or inorganic salt containing copper, preferably copper sulfate, copper chloride, copper nitrate or copper hydroxide.

In the description above, the content of the copper salt is adjusted according to the design, for example, 0.5 g/ L to 30 g/ L. In Examples, 10 g/ L of copper sulfate is used (the content of copper ion is 2.5 g/ L).

The source of nickel ions for chemical plating is usually a nickel-containing salt including, but not limited to, nickel-containing halide or sulfate, preferably nickel sulfate or nickel halide.

The steps of metallizing the substrate by chemical plating sequentially include cleaning, tempering, micro-etching, activation, reduction and plating. The steps of chemical plating will be described in detail below. The step of washing or drying may be performed on the treated substrate between the above steps as required.

First, a surface of the substrate to be chemically plated is cleaned and decontaminated with water or a solvent swelling agent. With the step, the surface of the substrate is cleaned, the grease is removed and the hole wall is decontaminated. Any solvent swelling agent known in the art, such as glycol ether or associated acetate thereof, may be used. In this example, a swelling agent containing diethylene glycol monobutyl ether is used.

An enhancing agent may be applied after the treatment with the solvent swelling agent. The enhancing agent includes sulfuric acid, chromic acid or permanganate base salts. Potassium permanganate is used in this example.

Next, the residue left by the enhancing agent may be neutralized using a neutralizing agent. A common neutralizing agent is an acidic aqueous solution of hydrogen peroxide and sulfuric acid. In this example, 70 v% sulfuric acid and 30 v% aqueous solution of hydrogen peroxide are used as the neutralizing agent.

An acidic or basic texturizing agent is applied to the neutralized substrate. A conventional texturizing agent may be used, preferably a basic surfactant having a polyamine.

A micro-etching process is performed on the substrate treated with the texturizing agent. A conventional etching composition, such as sulfuric acid, may be used in the micro-etching process. A micro-roughened surface may be provided on a surface of the substrate by the micro-etching process to enhance the adhesion of the catalyst and metal ions during the subsequent chemical plating.

Then, a pre-impregnating step is performed on the substrate processed with the micro-etching. A commercially available product may be used. In this example, a mixed solution of sulfuric acid and nonionic surfactant is used. A weight ratio of sulfuric acid to nonionic surfactant is 3000: 1.

The substrate performed with the pre-impregnating step is then activated by using the metal catalyst of the embodiments of the disclosure. The method for applying the catalyst may be, for example, by immersing, spraying or atomizing. Since the activation step is a key factor in controlling the deposition rate of chemical plating, the temperature and time for applying the catalyst can be adjusted according to actual requirements. In general, the time for applying the catalyst is about 0.1 to 10 minutes, for example, 0.1 to 5 minutes or 0.1 to 3 minutes. The temperature at which the catalyst is applied is about room temperature to 80°C, for example, from room temperature to 65°C or from room temperature to 55°C.

A reduction step is performed on the activated substrate with a reducing agent. The metal ions in the catalyst may be reduced to a metal state by the reducing agent. The conventional reducing agent is dimethylamine borane (DMAB) or sodium borohydride. The method for applying the reducing agent may be, for example, by immersing, spraying or atomizing. The time for applying the reducing agent is about 0.1 to 10 minutes, for example, 0.1 to 5 minutes or 0.1 to 3 minutes. The temperature at which the reducing agent is applied is about room temperature to 80°C, for example, from room temperature to 65°C or from room temperature to 55°C.

The chemical plating is performed on the substrate treated with the reducing agent by using a plating solution containing metal ions. The metal ions in the plating solution may be copper, copper alloy, nickel or nickel alloy. The plating may be operated by immersing the substrate into the plating solution or spraying the plating solution on the substrate. The time for applying the plating solution may be adjusted in accordance with the demand for the thickness of the plating layer, and is generally about 0.1 to 30 minutes, for example, 0.1 to 20 minutes and 0.1 to 10 minutes. The temperature at which the plating is performed may be adjusted according to the desired reaction rate, and is generally about 20°C to 80°C, for example, 20°C to 65°C or 25°C to 45°C. If the temperature is too high, the stability of the plating is lowered. If the temperature is too low, the reaction rate is too slow.

A rust-proof treatment may be performed on the metal-deposited substrate as required after the substrate is plated.

The metal catalyst of the disclosure will be described in more detail in the following Examples. The following Examples are used to further illustrate the disclosure, but they are not intended to limit the scope of the disclosure.

### [Example 1] Preparation of palladium catalyst

0.1 g of palladium chloride (PdCl₂) and 0.2 g of potassium chloride (KCl) were mixed in 50 ml of deionized water at room temperature for 10 hours. Then, 1.1 ml of 3-pyridinemethanol was added and the mixture was heated to a temperature of 80°C to 100°C for 24 hours. A crystalline palladium catalyst was obtained by filtering with a vacuum suction device.

The resulting catalyst had the following structure. ¹H-NMR spectra (DMSO-d6,400MHz) : δ H : 4.57-4.58 (d,4H), 5.57-5.60 (t,2H), 7.49-7.52 (dd, 2H), 7.89-7.91 (d, 2H), 8.62-8.63 (d, 2H), 8.71 (s, 2H)

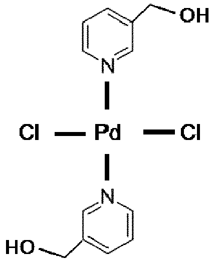

### [Example 2]

0.1 g of palladium chloride (PdCl₂) and 0.2 g of potassium chloride (KCl) were mixed in 600 ml of deionized water and stirred at room temperature for 10 hours. Then, 1.1 ml of 3-pyridinemethanol was added, and the mixture was heated to a temperature of 80°C to 100°C for 24 hours. The concentration of palladium ions in the resulting solution was about 100 ppm.

### [Example 3]

The process of the method for preparing the palladium catalyst of Example 3 was substantially the same as that of Example 1, except that that 3-pyridine methanol used in Example 1 was substituted by 2-pyridine methanol.

### [Example 4]

The process of the method for preparing the palladium catalyst of Example 4 was substantially the same as that of Example 1, except that the 3-pyridine methanol used in Example 1 was substituted by 2-amino-6-methylpyridine.

### [Example 5]

The process of the method for preparing the palladium catalyst of Example 5 was substantially the same as that of Example 1, except that the potassium chloride used in Example 1 was substituted by potassium iodide (KI). The resulting palladium catalyst was in powder form.

The resulting catalyst had the following structure. H-NMR spectra (DMSO-d6,400MHz) : δ H : 4.57-4.58 (d,4H), 5.57-5.60 (t,2H), 7.49-7.52 (dd, 2H), 7.89-7.91 (d, 2H), 8.62-8.63 (d, 2H), 8.71 (s, 2H)

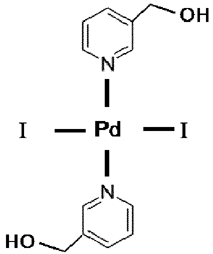

### [Example 6]

The process of the method for preparing the nickel catalyst of Example 6 was substantially the same as that of Example 1, except that the palladium chloride used in Example 1 was substituted by nickel sulfate.

### [Example 7]

0.1 g of palladium chloride (PdCl₂) and 0.1 g of potassium chloride (KCl) were mixed in 600 ml of deionized water and stirred at room temperature for 10 hours. Then, 145.6 µL of 3-pyridinemethanol was added, and the mixture was heated to a temperature of 80°C to 100°C for 24 hours. The concentration of palladium ions in the resulting solution is about 100 ppm.

### [Comparative Example 1]

The commercially available palladium catalyst (Atotech Deutschland Gmbh) containing a palladium ion concentration of 200 ppm was used. The pH value of the solution was 10 to 11.

### [Comparative Example 2]

The process of the method for preparing the palladium catalyst of Comparative Example 2 was substantially the same as that of Example 1, except that the potassium chloride used in Example 1 was substituted by hydrochloric acid (HCl). However, the crystalline palladium catalyst was not obtained in the solution.

From the results of Examples 1 to 5 and Comparative Example 2, it was found that the addition of an alkali metal halide in the synthesis step could help the palladium catalyst to form a crystal. It was assumed that since the alkali metal halide was added, an intermediate product of a complex of a metal ion and halogen was produced in the solution, which contributed to the formation of the catalyst structure of the embodiments of the disclosure.

### [Evaluation of Precipitation Reaction]

The palladium catalyst of Example 1 and Comparative Example 1 were formulated into a solution having a palladium concentration of 200 ppm, and a pH value of the solution was gradually lowered by slowly dripping HCl. The pH value of the solution was measured with a pH detector (model: HM-25R, available from Kohsieh Instruments Co., Ltd.), and the solution was observed whether the precipitation occurred. As a result of the experiment, the solution containing the palladium catalyst of Example 1 was kept clear at a pH of 3 to 9.7. By contrast, a solution containing the palladium catalyst of Comparative Example 1 was precipitated in a solution at a pH of 6.

From the above experimental results, it was found that the palladium catalyst of Examples of the disclosure had a better pH tolerance and was not precipitated at a pH of 3 to 12.

### [Chemical Plating]

After the cleaned plating through hole substrate (available from NEW-HEART TECHNOLOGY. CO., LTD.) was treated with 12 to 20 v% aqueous solution of diethylene glycol monobutyl ether (available from LCY Chemical Corp.) as a texturizing agent at about 75°C for 75 seconds, the texturizing agent was washed away. Then, after the substrate was treated with 20 wt% aqueous solution of sulfuric acid (available from LCY Chemical Corp.) of a micro-etching agent at about 30°C for 30 seconds, the substrate was washed. A 80 g/L sulfuric acid mixture (available from LCY Chemical Corp.) was used as a pre-impregnating solution, and the substrate was treated with the pre-impregnating solution at about 28°C for about 20 seconds, and the substrate was washed with water. Next, the catalyst synthesized in each Example was applied to the substrate and reacted at about 45°C for about 40 seconds, and then the substrate was washed with water. A solution containing 0.05 M of dimethylamine borane (available from LCY Chemical Corp.) was used as a reducing agent. After the substrate was treated with the reducing agent at about 35°C for about 30 seconds, the reducing agent was washed away. The metal deposition was performed with a chemical copper plating solution (available from LCY Chemical Corp. with a copper ion content of 2.5 to 4 g/ L) at about 35°C for about 7 minutes. Finally, the substrate was rinsed with water to obtain a substrate with metal deposition.

### [Evaluation of backlight test]

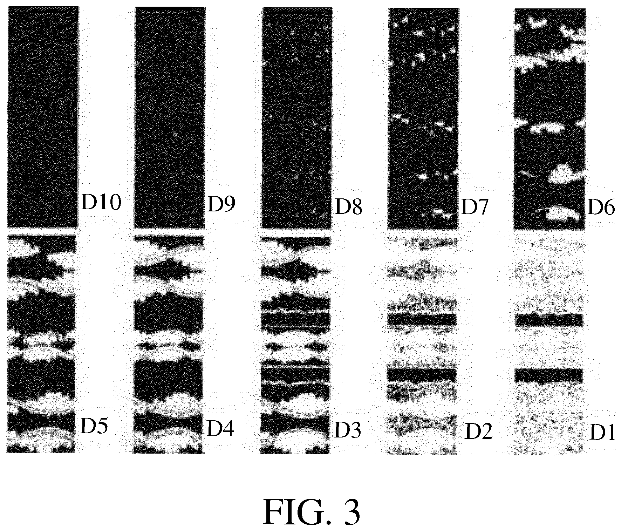

The substrate with metal deposition was dried, and a test hole was cut. The test hole was ground into half hole with sandpaper, and the back of the test hole was ground to a suitable thickness for backlight observation. The substrate having a cross section of the test hole was placed under an optical microscope. The magnification for observation was 50X, and a light source of the microscope was located behind the sample. The visible light transmitting through the test hole was observed, and the plating quality was evaluated. If the coating was completely plated, no light transmitted through the test hole, and black was observed by the microscope. If the plated coating was defective, the light transmitted through the test hole, and a bright spot was observed by the microscope. The backlight test was evaluated as D1 to D10 in accordance with a reference sample as shown in Fig. 3, in which D1 was the worst and D10 was the best. The plated coating evaluated as D8 or higher was evaluated as "○".

### [Evaluation of temperature impact test]

The temperature impact test was based on 2.6.8b of IPC-TM-650. A chemically plated substrate sample was thickened to 25 µm by plating. After a temperature of a tin furnace was raised to 288 °C, the substrate sample was placed on a molten tin surface. After 10 seconds, the substrate sample was taken out and cooled to room temperature. This step was repeated three times. The substrate sample treated with the temperature impact test was sliced. If the hole wall was not embossed, the substrate sample passed the temperature impact test and was evaluated as "○".

### [Evaluation of ion resistance]

In the plating step, the metal catalyst prepared by using the procedures described in the Examples was formulated into a catalyst solution having a palladium ion concentration of 200 ppm, and then 500 ppm of copper ions was added.

### [Evaluation result]

The palladium catalyst obtained in Example 1 was formulated into a catalyst solution (hereinafter referred to as the palladium catalyst concentration) having the palladium ion concentration of 70, 90, 100, 150, 200, 250 ppm, respectively. The chemical plating was performed with the catalyst solution. Then, the plated coating was evaluated by the backlight test and the temperature impact test. The evaluation results are shown in Table 2.

**Table 2**

| Concentration of palladium catalyst (ppm) | 70 | 90 | 100 | 150 | 200 | 250 |
|---|---|---|---|---|---|---|
| backlight test | ○ | ○ | ○ | ○ | ○ | ○ |
| temperature impact test | ○ | ○ | ○ | ○ | ○ | ○ |

As can be seen from the above experimental results, by using the palladium catalyst of the embodiments, the chemical plating was effectively performed at a concentration ranging from 70 to 250 ppm. The results of the backlight test and the temperature impact test were excellent, and the plated coating had excellent uniformity without light leakage.

The nickel catalyst obtained in Example 6 was formulated into a catalyst solution having a nickel catalyst concentration of 1000 ppm. The chemical plating was performed with the catalyst solution. Then, the plated coating was evaluated by the backlight test. The backlight test of the plated coating was evaluated as D9, which represented a good result.

As shown in Examples 1 and 6, the chemical plating was performed satisfactorily with the catalysts (palladium catalyst and nickel catalyst) of the embodiments of the disclosure, and the plated coating had excellent uniformity.

The palladium catalyst obtained in Example 7 was formulated into a catalyst solution having a palladium catalyst concentration of 200 ppm. The chemical plating was performed with the catalyst solution. Then, the plated coating was evaluated by the backlight test. The backlight test of the plated coating was evaluated as D9, which represented a good result.

As shown in Examples 1 and 7, the chemical plating was performed satisfactorily with the palladium catalyst of the embodiments of the disclosure in the case where a molar ratio (M: X: L) of metal ions to fluorine, chlorine, bromine or iodine to a chelating ligand is 1: 2: 2 or 1: 1: 3, and the plated coating had excellent uniformity.

The palladium catalyst obtained in Example 1 was formulated into a catalyst solution having a palladium ion concentration of 200 ppm, and a pH valued was adjusted. The chemical plating was performed with the catalyst solution having different pH values. Then, the plated coating was evaluated by the backlight test and the temperature impact test. The evaluation results are shown in Table 3.

**Table 3**

| pH value | 3 | 4 | 5 | 6 | 7 | 8 | 9 | 10 | 11 | 12 |
|---|---|---|---|---|---|---|---|---|---|---|
| backlight test | ○ | ○ | ○ | ○ | ○ | ○ | ○ | ○ | ○ | ○ |
| temperature impact test | ○ | ○ | ○ | ○ | ○ | ○ | ○ | ○ | ○ | ○ |

The palladium catalyst obtained in comparative Example 1 was formulated into a catalyst solution having a palladium catalyst concentration of 200 ppm, and the pH value of the catalyst solution was adjusted to pH 3. The chemical plating was performed with the catalyst solution. Then, the plated coating was evaluated by the backlight test. As shown in Fig.5, the backlight test of the plated coating was evaluated as D2, which represented a bad result.

As can be seen from the above experimental results, by using the palladium catalyst of the embodiments, the chemical plating was effectively performed at a pH value ranging from 3 to 12. The palladium catalyst had an excellent pH-resistance property, such that the chemical plating could be performed at a wide range of pH values. The evaluation results of the backlight test and the temperature impact test were excellent, and the plated coating had excellent uniformity.

The palladium catalyst obtained in Examples 1, 3 and 4 were formulated into a catalyst solution having a palladium ion concentration of 200 ppm, respectively, and a pH valued was adjusted. The chemical plating was performed with the catalyst solution having different pH values. Then, the plated coating was evaluated by the backlight test and the temperature impact test. The evaluation results are shown in Table 4.

**Table 4**

| pH value | 3 | 4 | 5 | 6 | 7 | 8 | 9 | 10 | 11 | 12 |
|---|---|---|---|---|---|---|---|---|---|---|
| Example 1 | ○ | ○ | ○ | ○ | ○ | ○ | ○ | ○ | ○ | ○ |
| Example 2 | ○ | ○ | ○ | ○ | ○ | ○ | ○ | ○ | ○ | ○ |
| Example 3 | ○ | ○ | ○ | ○ | ○ | ○ | ○ | ○ | ○ | ○ |

As can be seen from the above experimental results, by using the palladium catalyst obtained in Examples 1, 3 and 4, the chemical plating was effectively performed at a pH value ranging from of 3 to 12. Furthermore, the chemical plating was also performed satisfactorily with the palladium catalyst obtained in Example 5 at a pH value in a range of 3 to 12. The palladium catalyst had an excellent pH-resistance property at a pH value in a range of 3 to 12, such that the chemical plating could be performed at a wide range of pH values. The evaluation results of the backlight test was excellent, and the plated coating had excellent uniformity.

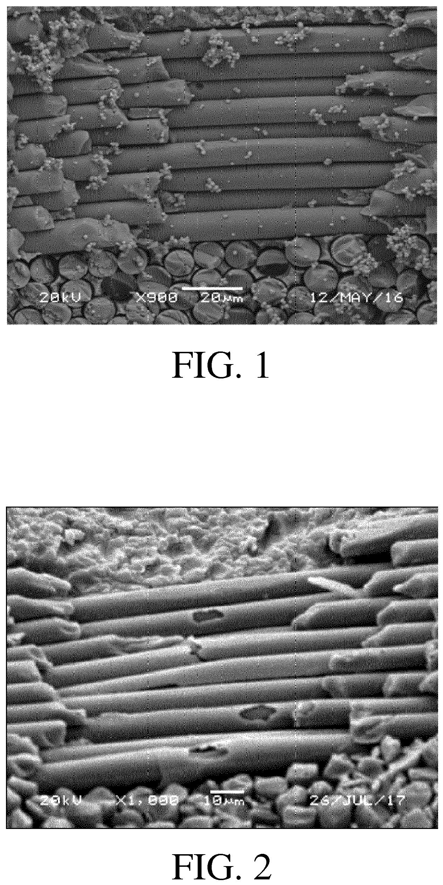

The palladium catalyst obtained in Example 1 and Comparative Example 1 were formulated into a catalyst solution having a palladium ion concentration of 200 ppm, respectively, and 500 ppm of copper ions were added. The chemical plating was performed with the catalyst solution. Then, the plated coating was scanned with a scanning electron microscope (JEOL JSM-5600) and evaluated by the backlight test. The results were shown as Fig. 1 and Fig. 2. Fig. 1 was a scanning electron microscopic image of a plated coating obtained by using the catalyst solution having 500 ppm of copper ions formulated by the palladium catalyst of Example 1. As shown in the electron image, the plated coating was smooth without light leakage. The backlight test of the plated coating was evaluated as D10, which represented a good result. Fig. 2 was a scanning electron microscopic image of a plated coating obtained by using the catalyst solution having 500 ppm of copper ions formulated by the palladium catalyst of Comparative Example 1. As shown in the electron image, the plated coating was uneven with defects. The backlight test of the plated coating was evaluated as D2, which represented a bad result.

As a result of the above Examples 1 and Comparative Example 1, it was found that the palladium catalyst of the embodiments of the disclosure had good resistance to copper ions. Even if the copper ion concentration was 500 ppm, the chemical plating could be performed satisfactorily. Furthermore, the evaluation results of the backlight test of the plated coating were excellent, and the plated coating had excellent uniformity.

Moreover, the catalyst solution of Examples 1 to 4 were not precipitated at pH 3 to 12, and the backlight test of the plated coating obtained by using the catalyst solution was evaluated as D8 or more.

The chemical plating could be performed at a wide range of pH values by using the metal catalyst provided by the embodiments of the disclosure, and the plated coating had excellent uniformity.

## Claims

1. A metal catalyst represented by Formula (1) or Formula (2): 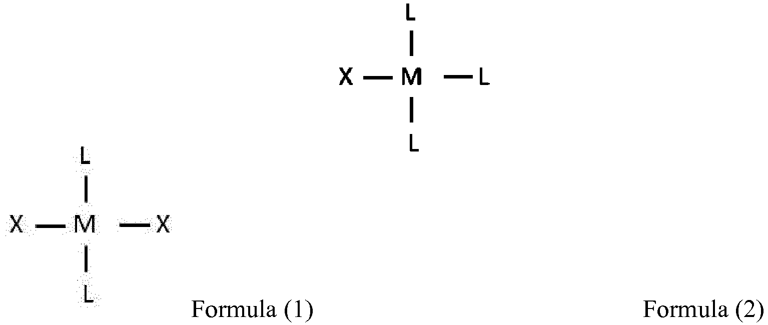
wherein M is a palladium, copper, platinum, nickel or silver ion;
X is fluorine, chlorine, bromine or iodine; and
L is a chelating ligand having a nitrogen-containing aromatic ring.

2. The metal catalyst as claimed in claim 1, wherein the chelating ligand is: 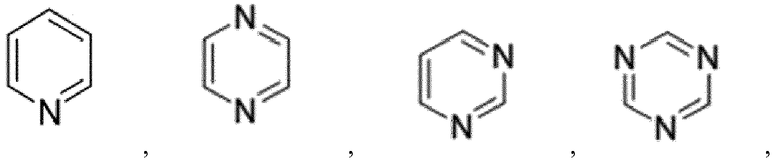 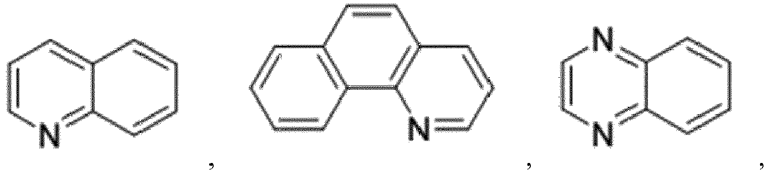 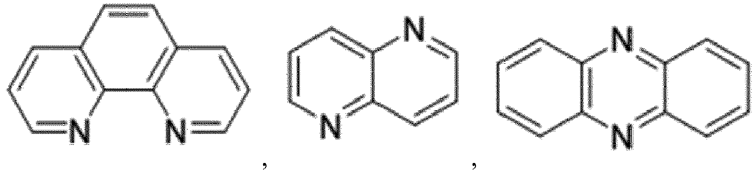 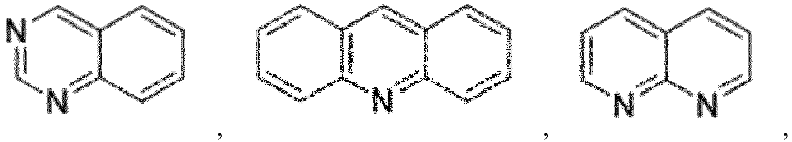 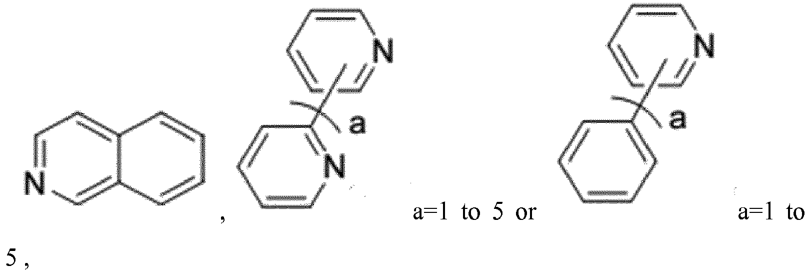
wherein at least one hydrogen on carbon of the chelating ligand is substituted by R, 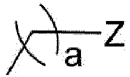 or Q; wherein R is a hydrocarbon group having 1 to 6 carbon atoms; Z is a hydroxyl group, a methoxy group or an ethoxy group, and a is an integer from 1 to 6; Q is COOH, COOR¹, COR¹, NHR¹ or NR¹R², wherein each of R¹ and R² is independently hydrogen or a hydrocarbon group having 1 to 6 carbon atoms; and/or wherein
the chelating ligand is 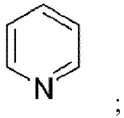 wherein at least one hydrogen on carbon of the chelating ligand is substituted by R, 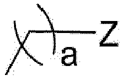 or Q; wherein R is a saturated or unsaturated, straight, branched or cyclic hydrocarbon group having 1 to 6 carbon atoms; Z is a hydroxyl group, a methoxy group or an ethoxy group, and a is an integer from 1 to 6; Q is COOH, COOR¹, COR¹, NHR¹ or NR¹R², wherein each of R¹ and R² is independently hydrogen or a hydrocarbon group having 1 to 6 carbon atoms; and/or wherein
the chelating ligand is pyridine, 2-pyridine methanol, 3-pyridine methanol, 4-pyridine methanol, 2-pyridineethanol, 3-pyridineethanol, 4-pyridineethanol, 4-amino-6-methylpyridine, 3-amino-6-methylpyridine, 2-amino-6-methylpyridine, 2-amino-5-methylpyridine or 2-amino-4-methylpyridine.

3. The metal catalyst as claimed in any of the previous claims, wherein
M is a palladium or nickel ion; and/or wherein
the metal catalyst is crystalline.

4. The metal catalyst as claimed in claim 2, wherein M is palladium or nickel ions; and X is fluorine, chlorine, bromine or iodine.

5. The metal catalyst as claimed in claim 3, wherein the chelating ligand is 3-pyridine methanol, 2-pyridine methanol or 2-amino-6-methylpyridine.

6. A method for preparing a metal catalyst, comprising:
mixing a metal salt with an alkali metal halide in water to form a metal catalyst precursor, wherein the metal salt is a salt containing a palladium, copper, platinum, nickel or silver ion; and
reacting the metal catalyst precursor with a chelating agent having a nitrogen-containing aromatic ring to form a metal catalyst.

7. The method for preparing the metal catalyst as claimed in claim 6, further comprising:
a filtration step for separating the metal catalyst from a mixture solution; and/or wherein
the alkali metal halide is potassium chloride, potassium iodide, potassium fluoride, potassium bromide or a combination thereof.

8. The method for preparing the metal catalyst as claimed in claim 6 or 7, wherein the salt containing a palladium ion comprises palladium halide, palladium acetate, palladium sulfate or palladium nitrate.

9. The method for preparing the metal catalyst as claimed in any of the previous method claims, wherein the chelating agent having a nitrogen-containing aromatic ring is: 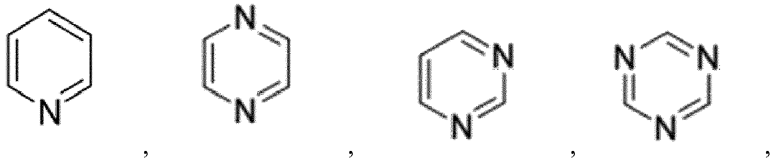 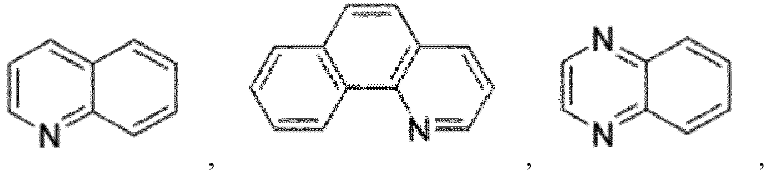 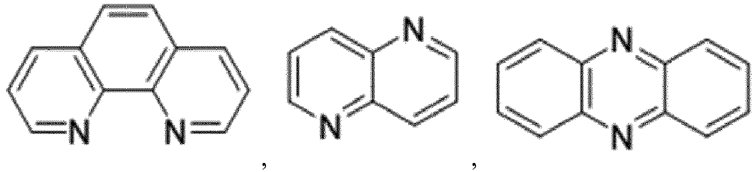 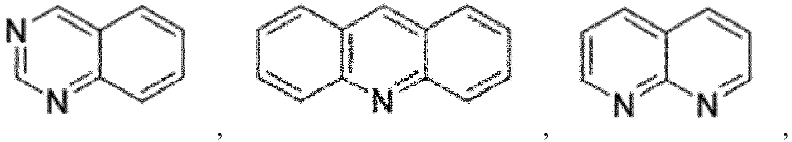 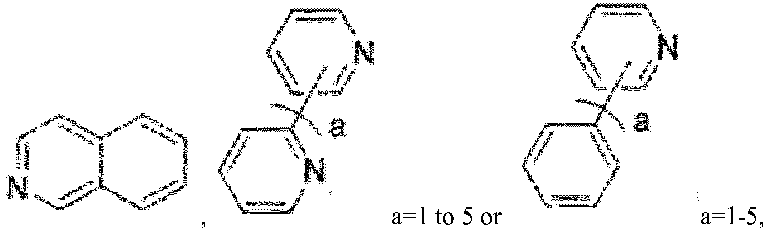 wherein at least one hydrogen on carbon of the chelating ligand is substituted by R, 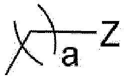 or Q; wherein R is a hydrocarbon group having 1 to 6 carbon atoms; Z is a hydroxyl group, a methoxy group or an ethoxy group, and a is an integer from 1 to 6; Q is COOH, COOR¹, COR¹, NHR¹ or NR¹R², wherein each of R¹ and R² is independently hydrogen or a hydrocarbon group having 1 to 6 carbon atoms.

10. The method for preparing the metal catalyst as claimed in any of the previous method claims, wherein the chelating agent having a nitrogen-containing aromatic ring is 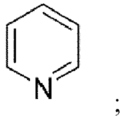 wherein at least one hydrogen on carbon of the chelating ligand is substituted by R, 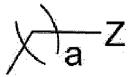 or Q; wherein R is a saturated or unsaturated, straight, branched or cyclic hydrocarbon group having 1 to 6 carbon atoms; Z is a hydroxyl group, a methoxy group or an ethoxy group, and a is an integer from 1 to 6; Q is COOH, COOR¹, COR¹, NHR¹ or NR¹R², wherein each of R¹ and R² is independently hydrogen or a hydrocarbon group having 1 to 6 carbon atoms.

11. The method for preparing the metal catalyst as claimed in any of the previous method claims, wherein
the chelating agent having a nitrogen-containing aromatic ring is 3-pyridine methanol, 2-pyridine methanol or 2-amino-6-methylpyridine; and/or wherein
the step of forming the metal catalyst precursor is performed at a temperature of 20°C to 60°C for 5 minutes to 24 hours; and/or wherein
the step of reacting the metal catalyst precursor with the chelating agent having a nitrogen-containing aromatic ring is performed at a temperature of 20°C to 100°C for 5 minutes to 48 hours; and/or wherein
the step of reacting the metal catalyst precursor with the chelating agent having a nitrogen-containing aromatic ring is performed at a temperature of 20°C to 95°C for 5 hours to 24 hours; and/or wherein
a molar ratio of palladium, copper, platinum, nickel or silver of the metal salt to halogen of the alkali metal halide to the chelating agent having a nitrogen-containing aromatic ring is 1:3-1 :1-3.

12. A metal catalyst prepared by the method as claimed in any of the previous method claims.

13. A method for chemical plating, comprising:
immersing a substrate in a solution containing the metal catalyst as claimed in claim 1, wherein a pH value of the solution is in a range of 2 to 12; and
then, immersing the substrate in a chemical plating solution.

14. The method for chemical plating as claimed in claim 13, wherein before immersing the substrate in the solution containing the metal catalyst, further comprising:
immersing the substrate in a texturizing agent containing one or more ionic surfactants;
then, immersing the substrate in a micro-etching solution; and
then, immersing the substrate in a pre-impregnating solution.

15. The method for chemical plating as claimed in claim 13 or 14, wherein
a pH value of the solution containing the metal catalyst is less than 8; and/or before immersing the substrate in the chemical plating solution, further comprising:
immersing the substrate in a reducing agent.
